# EUROPEAN PATENT APPLICATION

(11) **EP 3 950 138 A1**
(43) Date of publication of application: **09.02.2022**
(21) Application number: 20777847.3
(22) Date of filing: 18.03.2020
(51) Int. Cl.: B01L 3/14, G01N 35/02

(54) **SAMPLE CONTAINER AND CAP**

(30) Priority: 28.03.2019 JP 2019062977
(71) Applicant: SYSMEX CORPORATION, Kobe-shi Hyogo 651-0073 (JP)
(72) Inventor: SENDA Go, Kobe-shi, Hyogo 651-0073 (JP); KOIKE Hiroki, Kobe-shi, Hyogo 651-0073 (JP)
(74) Representative: Hoffmann Eitle
(86) International application number: PCT/JP2020/011889
(87) International publication number: WO 2020/196135

(57) **Abstract**

The occurrence of liquid leaking from a specimen container is inhibited. The specimen container 100 includes a container main body 20 including an opening 21 and a cap 10 arranged to close the opening 21 of the container main body 20 and including a slit 111 formed to allow an aspiration tube 30 to pass therethrough. The cap 10 includes a slit-formed portion 11 in which the slit 111 is formed and an elastic portion 12 provided to surround the slit-formed portion 11 and that is elastically deformed to movably support the slit-formed portion 11.

## Description

### TECHNICAL FIELD

The invention relates to a specimen container and a cap.

### BACKGROUND

Patent Literature 1 discloses a specimen container 900 including a container main body 902 including an opening 901, and a cap 903 arranged to close the opening 901 of the container main body 902 and including a slit (cut hole) 904 formed to allow an aspiration tube 905 to pass therethrough, as illustrated in FIG. 16. This specimen container 900 of Patent Literature 1 is configured such that the aspiration tube 905 is inserted into the specimen container 900 through the slit 904 of the cap 903 to aspirate the specimen, and after the aspiration, the aspiration tube 905 is withdrawn from the slit 904, which closes the slit 904 to close the specimen container 900. The slit 904 is provided in the center of the cap 903.

### CITATION LIST

### PATENT LITERATURE

Patent Literature 1: International Publication No. WO2015/118076

### SUMMARY

### TECHNICAL PROBLEMS

However, in the specimen container 900 of Patent Literature 1 described above, since the slit 904 into which the aspiration tube 905 for aspirating the specimen is inserted is provided in the center of the cap 903, the slit 904 is deformed in a distorted form when the aspiration tube 905 is inserted in a position displaced from the center of the cap 903. In this case, there is a disadvantage that the slit 904 does not return to the original position after the aspiration tube 905 is withdrawn from the slit 904, and the slit is not completely closed. In this case, there is a problem that liquid may leak from the specimen container 900.

This invention is directed to inhibit the occurrence of liquid leaking from a specimen container.

### SOLUTION TO PROBLEMS

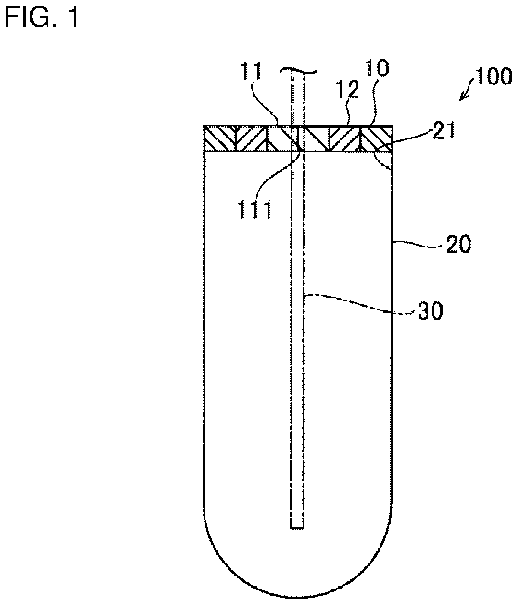

A specimen container (100) according to a first aspect of this invention includes, as illustrated in FIG. 1: a container main body (20) including an opening (21); and a cap (10) arranged to close the opening (21) of the container main body (20) and including a slit (111) formed to allow an aspiration tube (30) to pass therethrough, in which the cap (10) includes a slit-formed portion (11) in which the slit (111) is formed and an elastic portion (12) provided to surround the slit-formed portion (11) and that is elastically deformed to movably support the slit-formed portion (11). The phrase "to surround" has a meaning that includes not only being provided continuously but also being provided intermittently.

The specimen container (100) according to the first aspect of this invention is, as described above, provided with the elastic portion (12) arranged to surround the slit-formed portion (11) and that is elastically deformed to movably support the slit-formed portion (11). With this, also when the aspiration tube (30) is inserted in a position displaced from the center of the slit (cut hole) (111), the elastic portion (12) is elastically deformed, and the slit-formed portion (11) is moved following the position of the aspiration tube (30) such that the center of the slit (111) in plan view is positioned about an axis of the aspiration tube (30). Therefore, it is possible to inhibit the deformation of the slit (111) when the aspiration tube (30) is inserted from being distorted deformation, and thus it is possible to inhibit the slit (111) from not being moved back to the original position after the aspiration tube (30) is withdrawn from the slit (111). Since the slit-formed portion (11) is pulled and moved in a moving direction of the aspiration tube (30) when the aspiration tube (30) is withdrawn from the slit (111), the slit-formed portion (11) is moved back to the original position with the rebound and restoring force from the elastic deformation after the aspiration tube (30) is withdrawn. In this case, inertial force acts on the slit (111) of the slit-formed portion (11), and this allows the slit (111) to be easily moved back to the original position. As a result, it is possible to effectively inhibit the incomplete closing of the slit (111), and thus it is possible to inhibit the occurrence of liquid leaking from the specimen container (100).

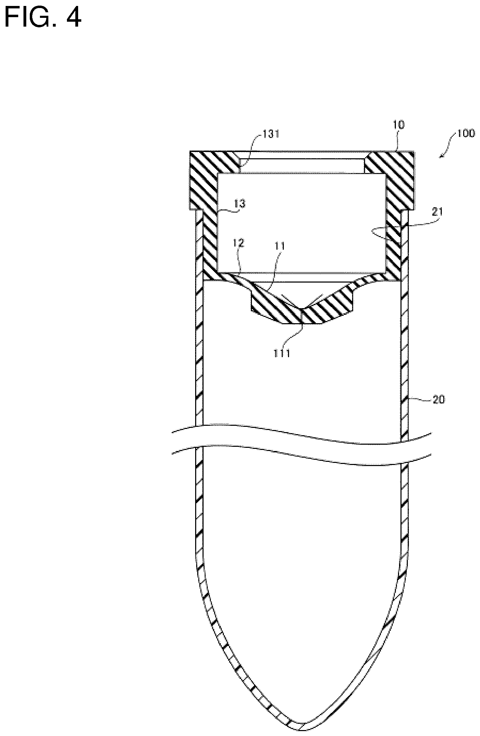

As illustrated in FIG. 4, in the specimen container (100) according to the above-described first aspect, preferably, the elastic portion (12) is integrally formed with the slit-formed portion (11) and has a smaller thickness than that of the slit-formed portion (11). With this configuration, it is possible to easily form the elastic portion (12) that surrounds the slit-formed portion (11) and that is elastically deformed easily.

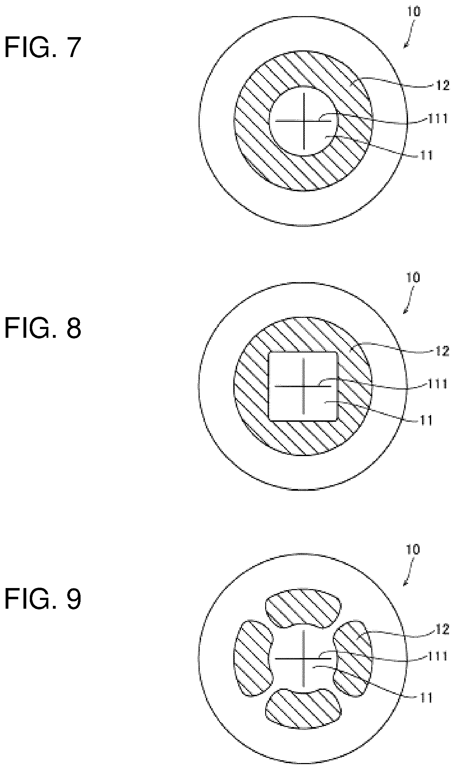

As illustrated in FIGS. 7 and 8, in the specimen container (100) according to the above-described first aspect, preferably, the elastic portion (12) is provided around the slit-formed portion (11) circumferentially. With this configuration, it is possible to support the slit-formed portion (11) by the elastic portion (12) in a balanced way, and thus it is possible to inhibit the moving direction of the slit-formed portion (11) from being limited in a predetermined direction. With this, it is possible to improve the capability of the slit-formed portion (11) to follow the aspiration tube (30).

As illustrated in FIG. 7, in this case, preferably, the elastic portion (12) is formed in a circular ring shape. With this configuration, it is possible to support the slit-formed portion (11) by the elastic portion (12) in a further balanced way, and thus it is possible to further improve the capability of the slit-formed portion (11) to follow the aspiration tube (30).

As illustrated in FIG. 4, in the configuration in which the above-described elastic portion (12) is circumferentially provided around the slit-formed portion (11), preferably, the cap (10) includes a container abutting portion (13) that abuts on an inner periphery of the container main body, and the elastic portion (12) couples the container abutting portion (13) and the slit-formed portion (11) with each other. With this configuration, it is possible to move the position of the slit-formed portion (11) with respect to the container abutting portion (13) that abuts on the container main body (20), and thus it is possible to move the position of the slit-formed portion (11) with respect to the container so as to follow the position of the aspiration tube (30).

As illustrated in FIGS. 7 and 8, in the configuration in which the above-described elastic portion (12) is circumferentially provided around the slit-formed portion (11), preferably, the slit-formed portion (11) is formed in a symmetrical shape about the center of the cap (10). With this configuration, it is possible to inhibit the disproportionate deformation of the slit (111) when the aspiration tube (30) is inserted in the slit (111), and thus it is possible to effectively inhibit the slit (111) from not being moved back to the original position after the aspiration tube (30) is withdrawn from the slit (111).

In the specimen container (100) according to the above-described first aspect, preferably, the elastic portion (12) is formed of a material of a lower elastic modulus than that of the slit-formed portion (11). With this configuration, it is possible to elastically deform the elastic portion (12) more easily than the case of the slit-formed portion (11).

As illustrated in FIG. 4, in the specimen container (100) according to the above-described first aspect, preferably, the slit-formed portion (11) is connected to the elastic portion (12) to project to a bottom portion side of the container main body (20). With this configuration, the slit-formed portion (11) is supported by the elastic portion (12) so as to be hung downward, and thus it is possible to allow the force toward the bottom portion of the container main body (20) to act on the slit-formed portion (11) so as to close the slit (111) of the slit-formed portion (11). With this, it is possible to close the slit (111) more reliably.

As illustrated in FIG. 4, in this case, preferably, the elastic portion (12) is formed to be tilted from a periphery portion of the cap (10) toward the slit-formed portion (11). With this configuration, comparing with a case where the periphery portion of the cap (10) and the slit-formed portion (11) are horizontally connected with each other by the elastic portion (12) by the shortest distance, it is possible to make the connecting length of the elastic portion (12) longer, and thus it is possible to increase a movable range of the slit-formed portion (11) with the movement of the aspiration tube (30). With this, it is possible to effectively improve the capability of the slit-formed portion (11) to follow the aspiration tube (30).

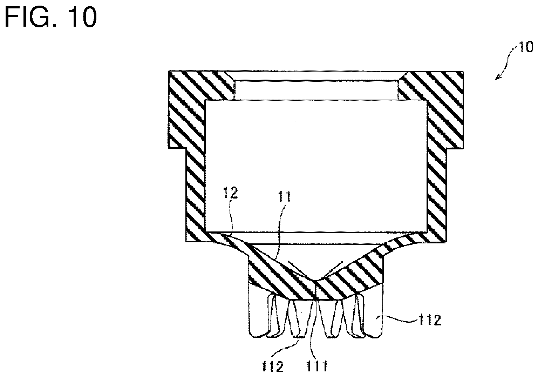

As illustrated in FIG. 10, in the specimen container (100) according to the above-described first aspect, preferably, the cap (10) includes protrusions (112) provided to surround the slit (111) and project from the slit-formed portion (11) to the bottom portion side of the container main body (20). With this configuration, it is possible to bend tips of the protrusions (112) formed around the slit (111) inward individually when the aspiration tube (30) is withdrawn from the slit (111), and thus it is possible to make intervals between the tips of the protrusions (112) small such that the protrusions (112) are closely attached to the aspiration tube (30). With this, it is possible to effectively remove the specimen attached to the periphery of the aspiration tube (30) by the tips of the protrusions (112) during the withdrawal of the aspiration tube (30).

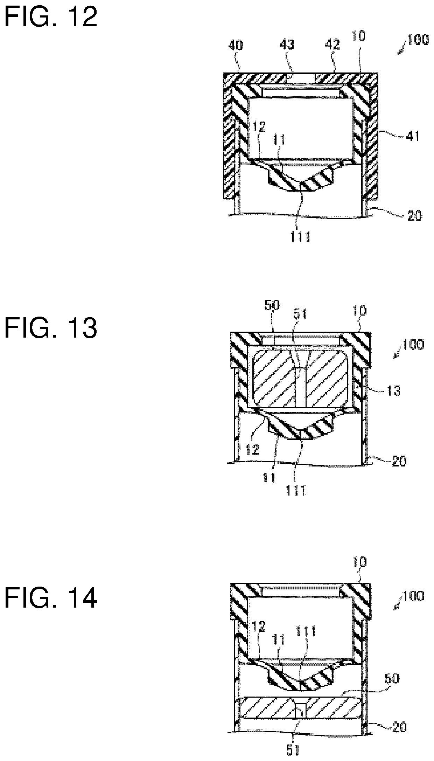

As illustrated in FIG. 12, the specimen container (100) according to the above-described first aspect, preferably, further includes a cap cover (40) arranged on the container main body (20) to cover the cap (10), in which the cap cover (40) includes a peripheral wall portion (41) arranged to surround a periphery of the container main body (20). With this configuration, it is possible to easily attach and remove the cap (10) by grasping the peripheral wall portion (41) of the cap cover (40).

As illustrated in FIG. 12, in this case, preferably, the cap cover (40) further includes a top portion (42) connected to the peripheral wall portion (41), and the top portion (42) is provided with an opening (43) smaller than the opening (21) of the container main body (20). With this configuration, it is possible to inhibit liquid leaking to the outside of the cap cover (40) also when the liquid is leaked to the outside of the slit (111), and thus it is possible to further inhibit the occurrence of liquid leaking from the specimen container (100).

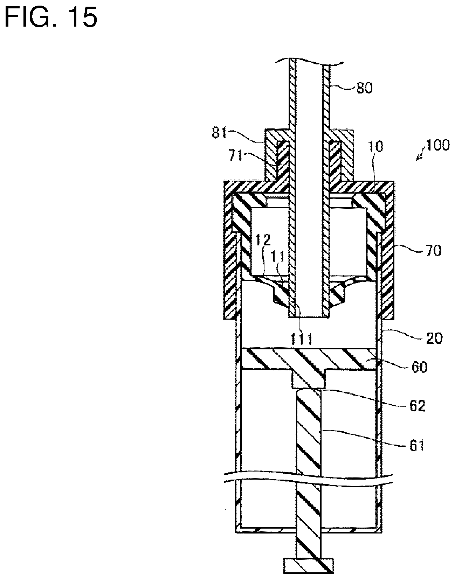

As illustrated in FIG. 15, in the configuration including the above-described cap cover, preferably, the specimen container (100) further includes a piston (60) provided in the container main body (20) and that slides in the container main body (20) and a piston rod (61) connected to the piston (60) and projecting from the bottom portion of the container main body (20), in which a cut (62) that allows the piston rod (61) to be broken and removed from the piston (60) is provided in the piston rod (61) in the vicinity of the piston (60), and a cylindrical portion (80) that is inserted into the slit (111) of the cap (10) is attachable to the cap cover (70). With this configuration, it is possible to easily introduce the specimen into the container main body (20) inside the slit (111) through the cylindrical portion by withdrawing the piston rod (61) to move the piston (60) to the bottom portion side of the container. It is possible to inhibit the piston rod (61) from being obstructive by breaking and removing the piston rod (61) in the vicinity of the piston (60) after the piston rod (61) is withdrawn, and the specimen is introduced.

A cap (10) according to a second aspect of this invention is, as illustrated in FIG. 1, a cap (10) for a specimen container (100) that is arranged to close an opening (21) of a container main body (20) and includes a slit (111) formed to allow an aspiration tube (30) to pass therethrough, including: a slit-formed portion (11) in which the slit (111) is formed; and an elastic portion (12) provided to surround the slit-formed portion (11) and that is elastically deformed to movably support the slit-formed portion (11).

The cap (10) according to the second aspect of the invention is, as described above, provided with the elastic portion (12) arranged to surround the slit-formed portion (11) and that is elastically deformed to movably support the slit-formed portion (11). With this, also when the aspiration tube (30) is inserted in a position displaced from the center of the slit (cut hole) (111), the elastic portion (12) is elastically deformed, and the slit-formed portion (11) is moved following the position of the aspiration tube (30) such that the center of the slit (111) in plan view is positioned about an axis of the aspiration tube (30). Therefore, it is possible to inhibit the deformation of the slit (111) when the aspiration tube (30) is inserted from being distorted deformation, and thus it is possible to inhibit the slit (111) from not being moved back to the original position after the aspiration tube (30) is withdrawn from the slit (111). Since the slit-formed portion (11) is pulled and moved in a moving direction of the aspiration tube (30) when the aspiration tube (30) is withdrawn from the slit (111), the slit-formed portion (11) is moved back to the original position with the rebound and restoring force from the elastic deformation after the aspiration tube (30) is withdrawn. In this case, inertial force acts on the slit (111) of the slit-formed portion (11), and this allows the slit (111) to be easily moved back to the original position. As a result, it is possible to effectively inhibit the incomplete closing of the slit (111), and thus it is possible to provide the cap (10) capable of inhibiting the occurrence of liquid leaking from the specimen container (100).

As illustrated in FIG. 4, in the cap (10) according to the above-described second aspect, preferably, the elastic portion (12) is integrally formed with the slit-formed portion (11) and has a smaller thickness than that of the slit-formed portion (11). With this configuration, it is possible to easily form the elastic portion (12) that surrounds the slit-formed portion (11) and that is elastically deformed easily.

As illustrated in FIGS. 7 and 8, in the cap (10) according to the above-described second aspect, preferably, the elastic portion (12) is provided around the slit-formed portion (11) circumferentially. With this configuration, it is possible to support the slit-formed portion (11) by the elastic portion (12) in a balanced way, and thus it is possible to inhibit the moving direction of the slit-formed portion (11) from being limited in a predetermined direction. With this, it is possible to improve the capability of the slit-formed portion (11) to follow the aspiration tube (30).

As illustrated in FIG. 7, in this case, preferably, the elastic portion (12) is formed in a circular ring shape. With this configuration, it is possible to support the slit-formed portion (11) by the elastic portion (12) in a further balanced way, and thus it is possible to further improve the capability of the slit-formed portion (11) to follow the aspiration tube (30).

As illustrated in FIG. 4, in the configuration in which the above-described elastic portion (12) is circumferentially provided around the slit-formed portion (11), preferably, the cap (10) includes a container abutting portion (13) that abuts on an inner periphery of the container main body (20), and the elastic portion (12) couples the container abutting portion (13) and the slit-formed portion (11) with each other. With this configuration, it is possible to move the position of the slit-formed portion (11) with respect to the container abutting portion (13) that abuts on the container main body (20), and thus it is possible to move the position of the slit-formed portion (11) with respect to the container so as to follow the position of the aspiration tube (30).

As illustrated in FIGS. 7 and 8, in the configuration in which the above-described elastic portion (12) is circumferentially provided around the slit-formed portion (11), preferably, the slit-formed portion (11) is formed in a symmetrical shape about the center of the cap (10). With this configuration, it is possible to inhibit the disproportionate deformation of the slit (111) when the aspiration tube (30) is inserted in the slit (111), and thus it is possible to effectively inhibit the slit (111) from not being moved back to the original position after the aspiration tube (30) is withdrawn from the slit (111).

In the cap (10) according to the above-described second aspect, preferably, the elastic portion (12) is formed of a material of a lower elastic modulus than that of the slit-formed portion (11). With this configuration, it is possible to elastically deform the elastic portion (12) more easily than the case of the slit-formed portion (11).

As illustrated in FIG. 4, in the cap (10) according to the above-described second aspect, preferably, the slit-formed portion (11) is connected to the elastic portion (12) to project to a bottom portion side of the container main body (20). With this configuration, the slit-formed portion (11) is supported by the elastic portion (12) so as to be hung downward, and thus it is possible to allow the force toward the bottom portion of the container main body (20) to act on the slit-formed portion (11) so as to close the slit (111) of the slit-formed portion (11). With this, it is possible to close the slit (111) more reliably.

As illustrated in FIG. 4, in this case, preferably, the elastic portion (12) is formed to be tilted from a periphery portion of the cap (10) toward the slit-formed portion (11). With this configuration, comparing with a case where the periphery portion of the cap (10) and the slit-formed portion (11) are horizontally connected with each other by the elastic portion (12) by the shortest distance, it is possible to make the connecting length of the elastic portion (12) longer, and thus it is possible to increase a movable range of the slit-formed portion (11) with the movement of the aspiration tube (30). With this, it is possible to effectively improve the capability of the slit-formed portion (11) to follow the aspiration tube (30).

As illustrated in FIG. 10, in the cap (10) according to the above-described second aspect, preferably, the cap (10) includes protrusions (112) provided to surround the slit (111) and project from the slit-formed portion (11) to the bottom portion side of the container main body (20). With this configuration, it is possible to bend tips of the protrusions (112) formed around the slit (111) inward individually when the aspiration tube (30) is withdrawn from the slit (111), and thus it is possible to make intervals between the tips of the protrusions (112) small such that the protrusions (112) are closely attached to the aspiration tube (30). With this, it is possible to effectively remove the specimen attached to the periphery of the aspiration tube (30) by the tips of the protrusions (112) during the withdrawal of the aspiration tube (30).

### ADVANTAGEOUS EFFECTS OF INVENTION

It is possible to inhibit the occurrence of liquid leaking from a specimen container.

### BRIEF DESCRIPTION OF DRAWINGS

FIG. 1 is a diagram illustrating an example of a specimen container.
FIG. 2 is a diagram illustrating a plan view of a slit-formed portion of the specimen container.
FIG. 3 is a block diagram for describing a measuring apparatus.
FIG. 4 is a diagram illustrating a side view of the specimen container.
FIG. 5 is a diagram for describing a first example of inserting an aspiration tube into the specimen container.
FIG. 6 is a diagram for describing a second example of inserting the aspiration tube into the specimen container.
FIG. 7 is a diagram illustrating a plan view of a first example of a cap of the specimen container.
FIG. 8 is a diagram illustrating a plan view of a second example of the cap of the specimen container.
FIG. 9 is a diagram illustrating a plan view of a third example of the cap of the specimen container.
FIG. 10 is a diagram illustrating a side view of an example where protrusions are provided in the cap of the specimen container.
FIG. 11 is a diagram for describing an operation example of a case where the aspiration tube is inserted in the cap of FIG. 10.
FIG. 12 is a diagram illustrating a side view of an example where a cap cover is attached to the specimen container.
FIG. 13 is a diagram illustrating a side view of a first example where a water absorption portion is provided in the specimen container.
FIG. 14 is a diagram illustrating a side view of a second example where the water absorption portion is provided in the specimen container.
FIG. 15 is a diagram illustrating a side view of an example of a case where a piston is provided to the specimen container.

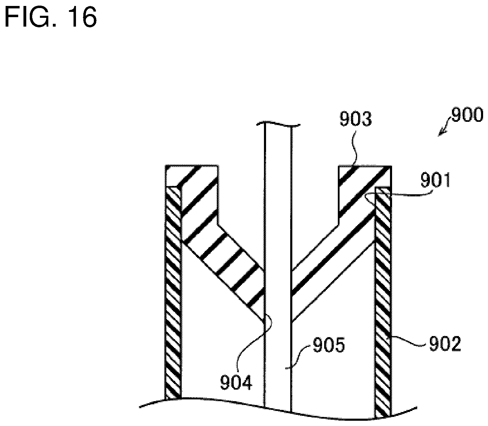

FIG. 16 is a diagram illustrating a side view of a conventional specimen container.

### MODE FOR CARRYING OUT INVENTION

Hereinafter, an embodiment is described with reference to the drawings.

### (Configuration of Specimen Container)

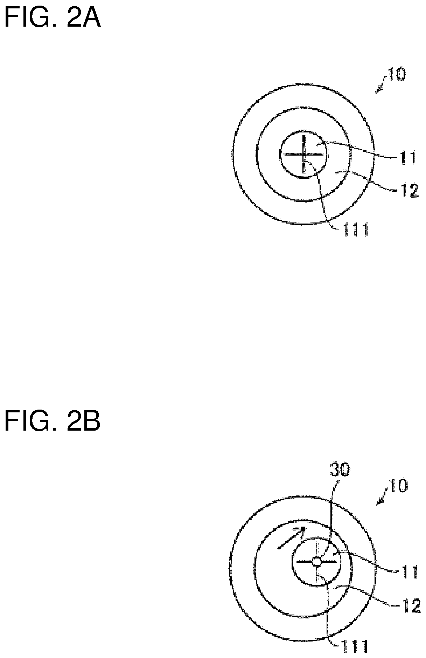

A specimen container 100 according to this embodiment is described with reference to FIGS. 1 and 2.

The specimen container 100 is a container for storing a specimen. The specimen container 100 stores the specimen that is measured by a measuring apparatus. The specimen is derived from living organism such as urine, blood, and cell, for example. The specimen container 100 stores a liquid as the specimen. The specimen container 100 may store powder as the specimen.

As illustrated in FIG. 1, an aspiration tube 30 of the measuring apparatus is inserted into the specimen container 100. The aspiration tube 30 aspirates the specimen in the specimen container 100. With this, the specimen is taken into the measuring apparatus, and the measuring is performed.

The specimen container 100 includes a cap 10 and a container main body 20. The container main body 20 includes an opening 21. The cap 10 is arranged to close the opening 21 of the container main body 20. A slit 111 that allows the aspiration tube 30 to pass therethrough is formed in the cap 10. The cap 10 includes a slit-formed portion 11 and an elastic portion 12. The slit 111 is formed in the slit-formed portion 11.

That is, the elastic portion 12 is formed to be deformed more easily than the slit-formed portion 11 is. As illustrated in FIG. 2, the elastic portion 12 moves the slit-formed portion 11 so as to follow the aspiration tube 30 also when the aspiration tube 30 is not inserted in the center of the cap 10.

The slit 111 is formed in a cross shape in the slit-formed portion 11, for example. The slit-formed portion 11 is formed of a rubber material such as silicon, for example. When the aspiration tube 30 is not inserted, the clearance of the slit 111 of the slit-formed portion 11 is closed, and the specimen container 100 is sealed.

The elastic portion 12 is provided to surround the slit-formed portion 11. The elastic portion 12 is elastically deformed to movably support the slit-formed portion 11. The elastic portion 12 is formed of a rubber material such as silicon, for example. When there is no external force, the elastic portion 12 supports the slit-formed portion 11 such that the slit 111 is positioned in the center of the cap 10.

As described above, the elastic portion 12 arranged to surround the slit-formed portion 11 and that is elastically deformed to movably support the slit-formed portion 11 is provided. With this, also when the aspiration tube 30 is inserted in a position displaced from the center of the slit 111, the elastic portion 12 is elastically deformed, and the slit-formed portion 11 is moved following the position of the aspiration tube 30 such that the center of the slit 111 in plan view is positioned about an axis of the aspiration tube 30. Therefore, it is possible to inhibit the deformation of the slit 111 when the aspiration tube 30 is inserted from being distorted deformation, and thus it is possible to inhibit the slit 111 from not being moved back to the original position after the aspiration tube 30 is withdrawn from the slit 111. Since the slit-formed portion 11 is pulled and moved in a moving direction of the aspiration tube 30 when the aspiration tube 30 is withdrawn from the slit 111, the slit-formed portion 11 is moved back to the original position with the rebound and restoring force from the elastic deformation after the aspiration tube 30 is withdrawn. In this case, inertial force acts on the slit 111 of the slit-formed portion 11, and this allows the slit 111 to be easily moved back to the original position. As a result, it is possible to effectively inhibit the incomplete closing of the slit 111, and thus it is possible to inhibit the occurrence of liquid leaking from the specimen container 100.

### (Configuration of Measuring Apparatus)

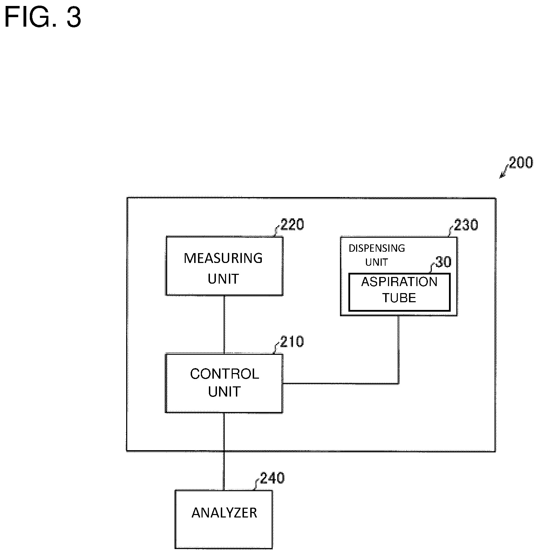

A configuration of a measuring apparatus 200 that measures a specimen stored in the specimen container 100 is described with reference to FIG. 3.

The measuring apparatus 200 measures a urine sample as the specimen, for example. As illustrated in FIG. 3, the measuring apparatus 200 includes a control unit 210, a measuring unit 220, and, a dispensing unit 230. The dispensing unit 230 is provided with the aspiration tube 30 that aspirates the specimen from the specimen container 100.

The control unit 210 controls the units of the measuring apparatus 200. The control unit 210 controls measuring processing of the specimen by the measuring apparatus 200. The control unit 210 includes a processing unit such as a CPU (central processing unit) and a storage unit such as a memory, for example. The control unit 210 executes the measuring processing based on a program. The control unit 210 transmits a measuring result to an analyzer 240 connected to the measuring apparatus 200.

The analyzer 240 analyzes information on components of the specimen that are measured by the measuring apparatus 200. The components in the urine sample analyzed by the analyzer 240 are urine particles, for example. The urine particles are red blood cells, white blood cells, epithelial cells, casts, bacteria, atypical cells, and leucocyte agglutination, for example. The analyzer 240 may include a general-purpose computer, for example.

The measuring unit 220 measures the specimen that is dispensed by the dispensing unit 230 from the specimen container 100. The measuring unit 220 includes a flow cytometer, for example. The flow cytometer optically measures the specimen by flow cytometry technique. The measuring unit 220 irradiates the specimen flowing in a cell with light and detects the light from the specimen to perform the measuring. The measuring unit 220 performs the measuring of a prepared specimen that is prepared by adding a reagent to the specimen.

The dispensing unit 230 aspirates the urine sample from the specimen container 100 and dispenses the urine sample to the measuring unit 220. The aspiration tube 30 of the specimen container 100 may be integrally provided with two tubes. For example, the aspiration tube 30 may be integrally provided with two tubes, a tube for aspiration and a tube for agitation.

As illustrated in FIG. 4, in the specimen container 100, the cap 10 is provided in the opening 21 of the container main body 20. The cap 10 seals the container main body 20 and is provided with the slit 111 into which the aspiration tube 30 is inserted. That is, in the cap 10, the aspiration tube is not inserted by piercing so as to inhibit the generation of waste rubber, and alternatively, the aspiration tube 30 is inserted through the slit 111.

The cap 10 is formed of a rubber material. For example, the cap 10 is formed of silicon rubber. The cap 10 may be formed of a rubber material other than silicon rubber such as elastomer and EPDM (ethylene-propylene-diene) or a resin material. The cap 10 may be formed as an integral object by double-shot molding. The cap 10 includes a container abutting portion 13 inserted in the container main body 20 and closely attached to a container inner wall, the elastic portion 12 connected to a lower portion of the container abutting portion 13, and the slit-formed portion 11 connected to the elastic portion 12. An upper portion of the container abutting portion 13 is provided with an opening 131. An internal space is formed inside the container abutting portion 13. The container abutting portion 13 abuts on an inner periphery of the container main body 20.

The elastic portion 12 is integrally formed with the slit-formed portion 11. The elastic portion 12 has a smaller thickness than that of the slit-formed portion 11. With this, it is possible to easily form the elastic portion (12) that surrounds the slit-formed portion (11) and that is elastically deformed easily.

For example, the elastic portion 12 has a thickness 1/1.5 times or more smaller than the thickness of the slit-formed portion 11. The elastic portion 12 preferably has a width 1/8 times or more greater and 1/1.5 times or more smaller than the width of the slit-formed portion 11. For example, the elastic portion 12 has a thickness that is about 1/2.5 times smaller than the thickness of the slit-formed portion 11. The elastic portion 12 has a width that is about 1/3 times smaller than the width of the slit-formed portion 11.

The elastic portion 12 may be formed of a material of a lower elastic modulus than that of the slit-formed portion 11. With this, it is possible to elastically deform the elastic portion 12 more easily than the case of the slit-formed portion 11.

The elastic portion 12 couples the container abutting portion 13 and the slit-formed portion 11 with each other. With this, it is possible to move the position of the slit-formed portion 11 with respect to the container abutting portion 13 that abuts on the container main body 20, and thus it is possible to move the position of the slit-formed portion 11 with respect to the container so as to follow the position of the aspiration tube 30.

The slit-formed portion 11 is connected to the elastic portion 12 to project to a bottom portion side of the container main body 20. With this, the slit-formed portion 11 is supported by the elastic portion 12 so as to be hung downward, and thus it is possible to allow the force to act toward the bottom portion of the container main body 20 so as to close the slit 111 of the slit-formed portion 11. With this, it is possible to close the slit 111 more reliably. That is, since the portion in which the slit 111 is provided is in a downward projecting shape, the slit 111 is displaced in a direction to be closed, and the liquid leaking is effectively inhibited.

The elastic portion 12 is formed to be tilted from a periphery portion of the cap 10 toward the slit-formed portion 11. With this, comparing with a case where the periphery portion of the cap 10 and the slit-formed portion 11 are horizontally connected with each other by the elastic portion 12 by the shortest distance, it is possible to make the connecting length of the elastic portion 12 longer, and thus it is possible to increase a movable range of the slit-formed portion 11 with the movement of the aspiration tube 30. With this, it is possible to effectively improve the capability of the slit-formed portion 11 to follow the aspiration tube 30.

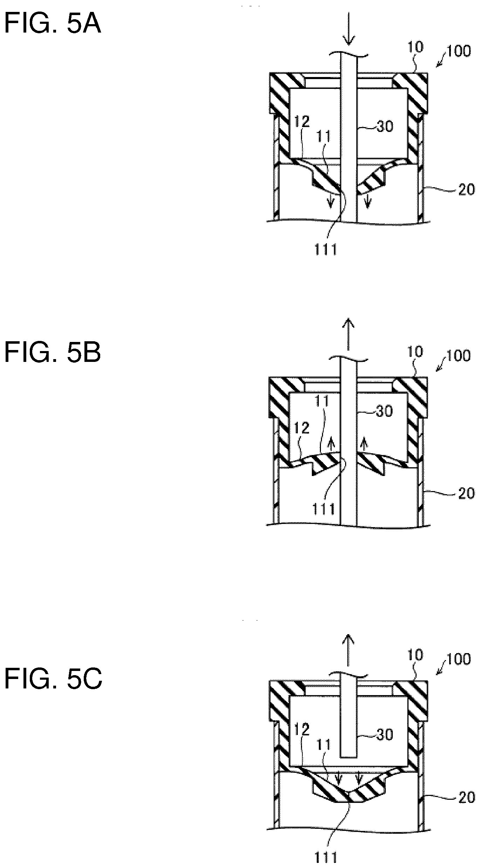

A case where the aspiration tube 30 is inserted in the vicinity of the center of the cap 10 is described with reference to FIG. 5. As illustrated in FIG. 5A, the aspiration tube 30 is inserted into the container main body 20 through the slit 111. In this process, an end surface of the slit 111 abuts on the aspiration tube 30, and thus friction force acts thereon. With this, the slit-formed portion 11 is moved in a direction toward the bottom portion of the container main body 20 with the movement of the aspiration tube 30 in the bottom portion direction. In this case, the elastic portion 12 is elastically deformed and supports the slit-formed portion 11.

As illustrated in FIG. 5B, the aspiration tube 30 that aspirates the specimen is moved upward and withdrawn from the slit 111. In this process, the slit-formed portion 11 is moved upward with the upward movement of the aspiration tube 30. In this case, the elastic portion 12 is elastically deformed and supports the slit-formed portion 11.

As illustrated in FIG. 5C, when the aspiration tube 30 is completely withdrawn from the slit 111, the slit-formed portion 11 is moved back to the original position with the elastic force of the elastic portion 12. With this, the slit 111 is restored to the sealed state.

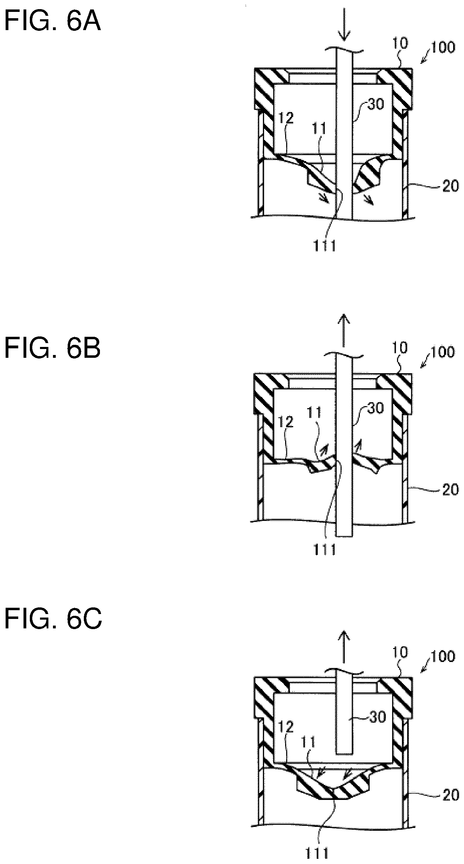

A case where the aspiration tube 30 is inserted in a position displaced from the center of the cap 10 is described with reference to FIG. 6. As illustrated in FIG. 6A, the aspiration tube 30 is inserted into the container main body 20 through the slit 111. In this process, the end surface of the slit 111 abuts on the aspiration tube 30, and thus the friction force acts thereon. With this, the slit-formed portion 11 is moved in the direction toward the bottom portion of the container main body 20 with the movement of the aspiration tube 30 in the bottom portion direction. The slit-formed portion 11 follows the positional displacement of the aspiration tube 30 and is moved in a direction of the aspiration tube 30. In this case, the elastic portion 12 is elastically deformed and supports the slit-formed portion 11.

As illustrated in FIG. 6B, the aspiration tube 30 that aspirates the specimen is moved upward and withdrawn from the slit 111. In this process, the slit-formed portion 11 is moved upward with the upward movement of the aspiration tube 30. The slit-formed portion 11 follows the positional displacement of the aspiration tube 30 and is moved in the direction of the aspiration tube 30. In this case, the elastic portion 12 is elastically deformed and supports the slit-formed portion 11.

As illustrated in FIG. 6C, when the aspiration tube 30 is completely withdrawn from the slit 111, the slit-formed portion 11 is moved back to the original position with the elastic force of the elastic portion 12. With this, the slit 111 is restored to the sealed state.

As illustrated in FIG. 7, the elastic portion 12 is provided around the slit-formed portion 11 circumferentially. With this, it is possible to support the slit-formed portion 11 by the elastic portion 12 in a balanced way, and thus it is possible to inhibit the moving direction of the slit-formed portion 11 from being limited in a predetermined direction. With this, it is possible to improve the capability of the slit-formed portion 11 to follow the aspiration tube 30.

For example, the elastic portion 12 is formed in a circular ring shape. With this, it is possible to support the slit-formed portion 11 by the elastic portion 12 in a further balanced way, and thus it is possible to further improve the capability of the slit-formed portion 11 to follow the aspiration tube 30.

The slit-formed portion 11 is formed in a symmetrical shape about the center of the cap 10. With this, it is possible to deform the slit 111 in a balanced way when the aspiration tube 30 is inserted in the slit 111, and thus it is possible to effectively inhibit the slit 111 from not being moved back to the original position after the aspiration tube 30 is withdrawn from the slit 111.

For example, as illustrated in FIG. 7, the slit-formed portion 11 is formed in a circular shape. The slit-formed portion 11 may be formed in a polygonal shape. For example, the slit-formed portion 11 may be formed in a substantially rectangular shape as illustrated in FIG. 8.

The elastic portion 12 connected to the slit-formed portion 11 may not be continuous as illustrated in FIG. 9.

As the example illustrated in FIG. 10, the cap 10 may be provided with protrusions 112 so as to remove the specimen from an outer surface of the aspiration tube 30.

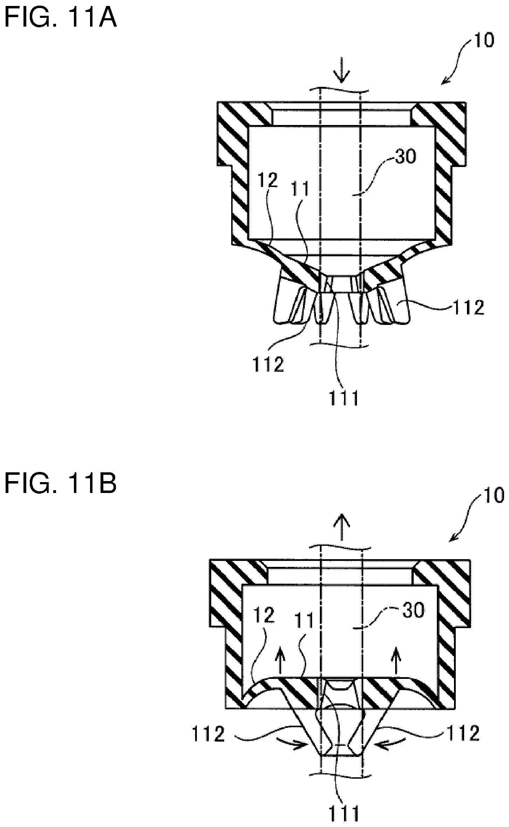

To be specific, the cap 10 includes the protrusions 112 provided to surround the slit 111 and project from the slit-formed portion 11 to the bottom portion side of the container main body 20. With this, as illustrated in FIG. 11, it is possible to bend tips of the protrusions 112 formed around the slit 111 inward individually when the aspiration tube 30 is withdrawn from the slit 111, and thus it is possible to make intervals between the tips of the protrusions 112 small such that the protrusions 112 are closely attached to the aspiration tube 30. With this, it is possible to effectively remove the specimen attached to the periphery of the aspiration tube 30 by the tips of the protrusions 112 during the withdrawal of the aspiration tube 30.

As illustrated in FIG. 11A, since the slit-formed portion 11 is pushed downward during the insertion of the aspiration tube 30, the protrusions 112 are opened. With this, the movement of the aspiration tube 30 is not interfered.

As illustrated in FIG. 11B, since the slit-formed portion 11 is pushed upward during the withdrawal of the aspiration tube 30, the protrusions 112 are mutually closed. With this, the protrusions 112 are closely attached to the aspiration tube 30, and the specimen attached to the outer surface of the aspiration tube 30 is removed. The specimen attached to the outer surface of the aspiration tube 30 is further removed by an end portion of the slit 111 as well.

As the example illustrated in FIG. 12, the specimen container 100 may be provided with a cap cover 40 covering the cap 10.

To be specific, the cap cover 40 is arranged on the container main body 20 to cover the cap 10. The cap cover 40 includes a peripheral wall portion 41 arranged to surround the periphery of the container main body 20. With this, it is possible to easily attach and remove the cap 10 by grasping the peripheral wall portion 41 of the cap cover 40.

The cap cover 40 is formed of a resin material such as polyethylene, for example.

The cap cover 40 includes a top portion 42 connected to the peripheral wall portion 41. The top portion 42 is provided with a smaller opening 43 than the opening 21 of the container main body 20. With this, it is possible to inhibit liquid leaking to the outside of the cap cover 40 also when the liquid is leaked to the outside of the slit 111, and thus it is possible to further inhibit the occurrence of liquid leaking from the specimen container 100.

As the example illustrated in FIG. 13, the specimen container 100 may be provided with a water absorption portion 50 so as to remove the specimen from the outer surface of the aspiration tube 30.

The water absorption portion 50 is provided above the slit-formed portion 11 and the elastic portion 12 of the cap 10. The water absorption portion 50 is provided inside the container abutting portion 13 of the cap 10. The water absorption portion 50 includes a through-hole 51 of an inner diameter narrower than an outer diameter of the aspiration tube 30. The water absorption portion 50 is formed of an absorbent material.

Assuming that the aspiration tube 30 is inserted while being displaced from the center of the cap 10, in the water absorption portion 50, an upper portion of the through-hole 51 is tapered. To be specific, the upper portion of the through-hole 51 is tapered so as to be widened upward. A clearance is provided between the water absorption portion 50 and an inner wall of the container abutting portion 13 of the cap 10.

The water absorption portion 50 is formed of a foam material such as polyurethane, for example. Preferably, the water absorption portion 50 is formed of a polyurethane sponge of a type that has a fine continuous pore structure. With this, it is possible to effectively absorb and hold the specimen attached to the outer surface of the aspiration tube 30 during the withdrawal of the aspiration tube 30.

As illustrated in FIG. 14, the water absorption portion 50 may be arranged away from the cap 10. For example, the water absorption portion 50 may be provided on the bottom portion side of the container main body 20 with respect to the cap 10.

As the example illustrated in FIG. 15, the specimen container 100 may be provided with a piston 60 and a piston rod 61.

To be specific, the specimen container 100 includes the piston 60 provided in the container main body 20 and that slides in the container main body 20 and the piston rod 61 connected to the piston 60 and projecting from the bottom portion of the container main body 20. A cut 62 that allows the piston rod 61 to be broken and removed from the piston 60 is provided in the piston rod 61 in the vicinity of the piston 60. A cylindrical portion 80 that is inserted into the slit 111 of the cap 10 is attachable to the cap cover 70. With this, it is possible to easily introduce the specimen into the container main body 20 inside the slit 111 through the cylindrical portion 80 by withdrawing the piston rod 61 to move the piston 60 to the bottom portion side of the container. It is possible to inhibit the piston rod 61 from being obstructive by breaking and removing the piston rod 61 in the vicinity of the piston 60 after the piston rod 61 is withdrawn, and the specimen is introduced.

The cylindrical portion 80 is fixed to the container main body 20 with an engaging portion 71 of the cap cover 70 and an engaging portion 81 of the cylindrical portion 80 being engaged with each other. When the cylindrical portion 80 is attached to the cap cover 70, a tip of the cylindrical portion 80 is inserted in the slit 111. When the cylindrical portion 80 is removed from the cap cover 70, the cylindrical portion 80 is withdrawn from the slit 111, the slit 111 is closed, and the container main body is sealed.

The embodiment disclosed herein should be considered as not restrictive but illustrative in every respect. A scope of the present invention is indicated by not the above-mentioned descriptions of the embodiment but by a scope of claims and further includes meaning equivalent to the scope of claims and all changes (modifications) within the scope.

### REFERENCE SIGNS LIST

- 10:: cap
- 11:: slit-formed portion
- 12:: elastic portion
- 20:: container main body
- 21:: opening
- 30:: aspiration tube
- 40:: cap cover
- 41:: peripheral wall portion
- 42:: top portion
- 43:: opening
- 60:: piston
- 61:: piston rod
- 62:: cut
- 100:: specimen container
- 111:: slit
- 112:: protrusion

## Claims

1. A specimen container, comprising:
a container main body including an opening; and
a cap arranged to close the opening of the container main body and including a slit formed to allow an aspiration tube to pass therethrough, wherein
the cap includes a slit-formed portion in which the slit is formed and an elastic portion provided to surround the slit-formed portion and that is elastically deformed to movably support the slit-formed portion.

2. The specimen container according to claim 1, wherein
the elastic portion is integrally formed with the slit-formed portion and has a smaller thickness than that of the slit-formed portion.

3. The specimen container according to claim 1 or 2, wherein
the elastic portion is provided around the slit-formed portion circumferentially.

4. The specimen container according to claim 3, wherein
the elastic portion is formed in a circular ring shape.

5. The specimen container according to claim 3 or 4, wherein
the cap includes a container abutting portion that abuts on an inner periphery of the container main body, and the elastic portion couples the container abutting portion and the slit-formed portion with each other.

6. The specimen container according to any one of claims 3 to 5, wherein
the slit-formed portion is formed in a symmetrical shape about the center of the cap.

7. The specimen container according to any one of claims 1 to 6, wherein
the elastic portion is formed of a material of a lower elastic modulus than that of the slit-formed portion.

8. The specimen container according to any one of claims 1 to 7, wherein
the slit-formed portion is connected to the elastic portion to project to a bottom portion side of the container main body.

9. The specimen container according to claim 8, wherein
the elastic portion is formed to be tilted from a periphery portion of the cap toward the slit-formed portion.

10. The specimen container according to any one of claims 1 to 9, wherein
the cap includes protrusions provided to surround the slit and project from the slit-formed portion to a bottom portion side of the container main body.

11. The specimen container according to any one of claims 1 to 10, further comprising:
a cap cover arranged on the container main body to cover the cap, wherein
the cap cover includes a peripheral wall portion arranged to surround a periphery of the container main body.

12. The specimen container according to claim 11, wherein
the cap cover further includes a top portion connected to the peripheral wall portion, and the top portion is provided with an opening smaller than the opening of the container main body.

13. The specimen container according to claim 11 or 12, further comprising:
a piston provided in the container main body and that slides in the container main body; and a piston rod connected to the piston and projecting from a bottom portion of the container main body, wherein
in the vicinity of the piston in the piston rod, a cut that allows the piston rod to be broken and removed from the piston is provided, and
the cap cover is configured to be attachable to a cylindrical portion that is inserted into the slit of the cap is attachable to the cap cover.

14. A cap for a specimen container that is arranged to close an opening of a container main body and includes a slit formed to allow an aspiration tube to pass therethrough, comprising:
a slit-formed portion in which the slit is formed; and
an elastic portion provided to surround the slit-formed portion and that is elastically deformed to movably support the slit-formed portion.

15. The cap according to claim 14, wherein
the elastic portion is integrally formed with the slit-formed portion and has a smaller thickness than that of the slit-formed portion.

16. The cap according to claim 14 or 15, wherein
the elastic portion is provided around the slit-formed portion circumferentially.

17. The cap according to claim 16, wherein
the elastic portion is formed in a circular ring shape.

18. The cap according to claim 16 or 17, further comprising:
a container abutting portion that abuts on an inner periphery of the container main body, wherein
the elastic portion couples the container abutting portion and the slit-formed portion with each other.

19. The cap according to any one of claims 16 to 18, wherein
the slit-formed portion is formed in a symmetrical shape about the center of the cap.

20. The cap according to any one of claims 14 to 19, wherein
the elastic portion is formed of a material of a lower elastic modulus than that of the slit-formed portion.

21. The cap according to any one of claims 14 to 20, wherein
the slit-formed portion is connected to the elastic portion to project to a bottom portion side of the container main body.

22. The cap according to claim 21, wherein
the elastic portion is formed to be tilted from a periphery portion of the cap toward the slit-formed portion.

23. The cap according to any one of claims 14 to 22, further comprising:
protrusions provided to surround the slit and project from the slit-formed portion to a bottom portion side of the container main body.
